Europäisches Patentamt

(19) European Patent Office

Office européen des brevets

(11) Publication number: **0 024 188**
**A1**

(12) # EUROPEAN PATENT APPLICATION

(21) Application number: 80302766.3

(22) Date of filing: 12.08.80

(51) Int. Cl.³: **A 01 N 43/56**
**A 01 N 25/04**
**//(A01N43/56, 39/02)**

(30) Priority: 14.08.79 GB 7928259

(43) Date of publication of application:
25.02.81 Bulletin 81/8

(84) Designated Contracting States:
DE FR GB

(71) Applicant: THE BOOTS COMPANY LIMITED
1 Thane Road West
Nottingham Nottinghamshire NG2 3AA(GB)

(72) Inventor: Guthrie, Walter Graham
6 Yew Close East Leake
Loughborough Leicestershire(GB)

(72) Inventor: Bell, Mark
2 Alan Grove
Fareham Hampshire(GB)

(72) Inventor: Mayes, Anthony Joseph
9b Littlegreen Road
Woodthorpe Nottingham(GB)

(74) Representative: Waldman, Ralph David et al,
Patents Section The Boots Company Limited Pennyfoot
Street
Nottingham NG2 3AA(GB)

(54) **Herbicides that contain difenzoquat.**

(57) The herbicide difenzoquat can be formulated as a concentrate of one of its salts in a mixture comprising at least one surfactant and a non-aqueous organic solvent system comprising at least one water-immiscible solvent. Other herbicides, particularly phenoxyalkanoic acids, can be added to form stable compatible concentrates.

EP 0 024 188 A1

TITLE MODIFIED
see front page

- 1 -

The Boots Company Limited
Herbicides

This invention relates to herbicides.

Salts of the cation, difenzoquat (1,2-dimethyl-3,5-diphenylpyrazolium), and especially the methyl-sulphate salt, are used as a herbicide for control of wild oats (Avena spp.) in cereals, such as wheat and barley. In order to broaden the spectrum of activity of the difenzoquat it is often desirable to mix it with other herbicides such as broad leaf weed or grass herbicides.

Difenzoquat salts are water soluble but only sparingly soluble in organic solvents whereas most of the herbicides with which one would wish to combine difenzoquat salts e.g. esters of phenoxyalkanoic acids, such as dichlorprop, are usually formulated as concentrates in water immiscible solvents.

Where it is desired to combine a sparingly water soluble herbicide with difenzoquat it has been necessary up till now to mix in the spray tank just before use e.g. as described in B.P. 1,454,907.

Since the difenzoquat salt is usually supplied as a bulky powder which has to be mixed with a wetting agent prior to formulation for spraying it would be desirable to have a concentrate formulation to which such non-water soluble herbicides could be added to form a concentrate which combined all the ingredients in one container which can be added to the spray tank prior to use.

According to the invention there is provided a herbicide concentrate comprising a difenzoquat salt dispersed in a mixture comprising at least one surfactant and a non-aqueous organic solvent system comprising at least one water-immiscible solvent.

The difenzoquat salt is generally the methyl sulphate although other salts may be used, for example the p-toluene sulphonate salt.

To this concentrate can be added a wide range of herbicides which up till now have not been able to form compatible stable concentrates with the difenzoquat salt.

The concentrate of the invention is particularly suitable for the inclusion of phenoxyalkanoic acid herbicides in the form of their esters. Examples of phenoxyalkanoic acids which can be included in the concentrate are dichlorprop (also known as 2,4-DP) which is 2-(2,4-dichlorophenoxy)propionic acid, MCPA which is 4-chloro-2-methylphenoxyacetic acid, MCPB which is 4-(4-chloro-2-methylphenoxy)butyric acid, and mecoprop which is 2-(4-chloro-2-methylphenoxy)propionic acid. The compositions usually contain just one such compound but if desired two or more may be present. These acids are present usually as an alkyl ester, e.g. a $C_{1-10}$ alkyl ester and especially its isoctyl ester. The ratios of difenzoquat salt to the phenoxyalkanoic acid ester are preferably within the range from 1:5 to 5:1, especially from 1:2 to 2:1.

The concentrates may additionally or alternatively include one or more other herbicides to increase the spectrum of activity. A particularly suitable compound which can be added is benazolin which is the common name for 4-chloro-2-oxobenzothiazolin-3-ylacetic acid and unless otherwise stated this name is used in this specification to mean the free acid or one of its salt or ester derivatives. In the compositions of the invention the benazolin is preferably present as an ester, especially a lower alkyl, e.g. $C_{1-8}$ alkyl, ester and usually the ethyl ester. Another suitable herbicide which may be added is dicamba which is 3,6-dichloro-2-methoxybenzoic acid. This is usually present as its free acid. Other herbicides which can be included are hydroxybenzonitriles such as icxynil and bromoxynil, triazines such as cyanazine and terbutyne, nitroanilines such as trifluralin, anilides such as alachlor and diethatyl ethyl and bentazone .

The ratios of difenzoquat salt to benazolin when present are preferably within the range of from 15:1 to 2:1, especially from 10:1 to 5:1.

The ratios of difenzoquat salt to dicamba, when present, are preferably within the range of from 20:1 to 5:1, especially from 15:1 to 10:1. All ratios are based on the weights of the difenzoquat cation and the free acids.

The concentrates of the invention preferably comprise from 5-45% preferably 10-35% $^W/v$ of the difenzoquat salt. The compositions may comprise a number of surfactants. Suitable surfactants are nonionic compounds, for example an ethoxylated alkyl phenol such as a nonyl phenoxypoly (ethyleneoxy) ethanol; an ethoxylated aliphatic alcohol such as an alkyl poly (ethyleneoxy) ethanol; a poly (ethyleneoxy) poly (propyleneoxy) block co-polymer; or a carboxylic ester solubilised with a polyol or polyoxyethylene. Cationic surfactants may be used, for example an aliphatic mono-, di- or polyamine as an acetate, naphthenate or oleate; an oxygen containing amine such as amine oxide or polyoxyethylene alkylamine; an amide-linked amine prepared by the condensation of a carboxylic acid with a di- or poly-amine; or a quaternary ammonium salt . The concentrate will usually contain from 10-30% $^W/v$ of the surfactant. The total amount of organic solvent is usually from 5 to 20% $^W/v$ of the concentrate. Examples of suitable water immiscible solvents include petroleum based aromatic or aliphatic hydrocarbons such as xylene, heavy aromatic naphtha and kerosene, chlorinated aromatic or aliphatic compounds such as monochlorobenzene, chlorotoluene and 1,1,1-trichloroethane, ketonic solvents such as isophorone, cyclohexanone, methyl isobutyl ketone, and di-isobutyl ketone, and esters such as butyl benzoate, dibutyl phthalate and dimethyl phthalate. The solvent system may include water miscible solvents such as alcohols e.g. 2-ethoxyethanol.

The compositions may also include other additives such as suspending agents and antifoaming agents.

The invention is illustrated in the following Examples:

Example 1

A non aqueous dispersion was formulated from the following ingredients.

|  | $\%^W/v$ |
| --- | --- |
| Difenzoquat methyl sulphate | 24.6 |
| Benazolin ethyl ester | 2.4 |
| Dichlorprop isoctyl ester | 31.8 |
| Dicamba | 1.4 |
| Nonyl phenoxyethoxylate wetter[1] | 17.5 |
| Nonyl phenoxyethoxylate emulsifier[2] | 7.5 |
| Smectite clay suspending agent | 1.5 |
| Isophorone | 10.0 |
| Silicone antifoam[3] | 0.2 |
| Kerosene | to 100% volume |

[1]Agral
[2]Ethylan 77
[3]Rhodorsil 424

This may be diluted with water e.g. with about 40 to 80 volumes and the resultant diluted mixture applied so that about 1 to 2Kg. of difenzoquat salt are applied per hectare of cereal crop.

Example 2

The mixture above was used to treat wheat fields infested with wild oats at a rate of application such that 1.08 kg./hectare of the difenzoquat salt were applied. Satisfactory wild oat control was achieved as well as control of broad leaved weeds.

The wild oat control was better than that achieved when using difenzoquat salt alone at the same rate.

Claims

1.  A herbicide concentrate comprising a difenzoquat salt
dispersed in a mixture comprising at least one surfactant
and a non-aqueous organic solvent system comprising at
least one water-immiscible solvent.

2.  A concentrate according to claim 1 which includes at
least one other compatible herbicide.

3.  A concentrate according to claim 2 in which the
herbicide is an ester of a phenoxyalkanoic acid herbicide.

## DOCUMENTS CONSIDERED TO BE RELEVANT

| Category | Citation of document with indication, where appropriate, of relevant passages | Relevant to claim |
|---|---|---|
| D | <u>GB - A - 1 454 907</u> (AMERICAN CYANAMID COMP.)<br><br>* Claims 1,13,14; page 5, lines 60-65; page 6, lines 1-14 *<br><br>-- | 1-3 |
| | <u>FR - A - 2 327 730</u> (ELI LILLY)<br><br>* Page 27, line 29; page 43, lines 16-36 *<br><br>-- | 1 |
| | <u>DE - A - 2 341 594</u> (BASF)<br><br>* Claims; page 3, line 16; page 4, lines 1-28 *<br><br>-- | 1-3 |
| | <u>US - A - 3 882 142</u> (AMERICAN CYANAMID COMP.)<br><br>* Claims; column 7, lines 44-56 *<br><br>-- | 1 |
| A | CHEMICAL ABSTRACTS, vol. 91, no. 1, 2nd July 1979, page 144, right-hand column, nr. 1308x<br>Columbus, Ohio, U.S.A.<br>J. HOLROYD et al.: "Mixtures of difenzoquat and dichlorprop for the control of Avena fatua and broad-leaved weeds in spring barley"<br><br>& PROC. BR. CROP PROT. CONF.-WEEDS 1978, 14(1), 9-14<br><br>* Abstract *<br><br>-- | 3 |
| P | <u>FR - A - 2 418 625</u> (SOCIETE FR. DES PETROLES BP)<br><br>./. | 1 |

**CLASSIFICATION OF THE APPLICATION (Int Cl³)**

A 01 N 43/56
25/04//
(A 01 N 43/56
39/02)

**TECHNICAL FIELDS SEARCHED (Int Cl³)**

A 01 N 43/56
25/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search The Hague | Date of completion of the search 27-11-1980 | Examiner MERGONI |
|---|---|---|

EPO Form 1503.1  06.78

| | EUROPEAN SEARCH REPORT | | |
|---|---|---|---|

## DOCUMENTS CONSIDERED TO BE RELEVANT

| Category | Citation of document with indication, where appropriate, of relevant passages | Relevant to claim |
|---|---|---|
| | * Claims; examples * | |
| | -- | |
| P | US - A - 4 170 464 (AMERICAN CYA-NAMID COMP.) <br> * Claims; column 3, lines 47-68; column 4, lines 1-9 * | 1-3 |
| | ---- | |

European Patent Office

CLASSIFICATION OF THE APPLICATION (Int. Cl. 3)

TECHNICAL FIELDS SEARCHED (Int. Cl. 3)